Europäisches Patentamt

(19) European Patent Office

Office européen des brevets

(11) Publication number: **0 087 847**
A1

## (12) EUROPEAN PATENT APPLICATION

(21) Application number: 83200289.3

(22) Date of filing: 25.02.83

(51) Int. Cl.³: **C 13 L 1/08**
C 08 J 9/08, C 08 L 3/00

(30) Priority: 25.02.82 DE 3206751

(43) Date of publication of application:
07.09.83 Bulletin 83/36

(84) Designated Contracting States:
AT BE CH FR GB IT LI LU NL SE

(71) Applicant: ZETMEELBEDRIJVEN DE BIJENKORF B.V
Lagedijk 5
NL-1541 KA Koog aan de Zaan(NL)

(72) Inventor: Gräfe, Jürgen Ernst
Hörzhauser Strasse 4
D-8899 Peutenhausen(DE)

(74) Representative: Urbanus, Henricus Maria, Ir. et al,
c/o Vereenigde Octrooibureaux Nieuwe Parklaan 107
NL-2587 BP 's-Gravenhage(NL)

(54) A process for preparing foamed gelatinized starch products.

(57) Starch or starch-containing materials may be heated in an extruder press at elevated temperatures in the presence of water and a gas-forming or gas-generating expanding agent and extruded, with gelatinization to a starch foam product which, like synthetic foams, may be used for technical purposes or as a food.

EP 0 087 847 A1

A process for preparing foamed gelatinized starch products.

Various foam materials having closed, open and mixed cell structures on the basis of synthetic resins have been known for decades and have been of great technological significance. The thermosetting resins, which during the foaming action solidify by polymerization or polycondensation, essentially comprise the urea, phenol and polyurethane foams. The foams of thermoplastic materials such as polystyrene, polyvinyl chloride, polyethylene or the copolymerisates thereof, etc., may be stimulated to form foam at elevated temperature through an in-situ reaction of compounds generating gases or through the addition of expanding agents in the form of low- boiling liquids,e.g., $C_2$-fluorohydrocarbons, before they harden in the foamed state either by extension of the macromolecular structure or by being cooled to below the melting temperature.

All of these synthetic foams are hardly friendly to the environment and very persistent. Therefore, in the long run they represent a considerable burden on the environment. Many thermoplastic foams show the additional crucial drawback that they will melt or burn at higher temperatures and thereby generate toxic gases.

For nearly a century a sponge of starch has been known which is produced by cooling a starch paste which has first been boiled,to temperatures below the freezing point, which results in retrogradation, i.e. a reversal of the starch to a cold-water-insoluble state, after which the frozen mass is defrosted and the water is removed from the spongy mass. Such spongy starch materials could be used in the medical field, e.g., as resorbable aids for absorbing secretions. This preparation, however, is cumbersome and leads to products that are relatively unstable and have hardly been used. German Offenlegungsschrift 29 38 596 describes a similar spongy body of starch for the foodstuff industry, which is also very expensive to make.

German patent 23 04 736 discloses a process for preparing a foam material, which comprises dry-heating carbohydrates or polysaccharides in granulated, pressed or coarsely crystalline form in a tunnel kiln for 10-40 minutes at 200-400°C with addition of slight amounts of organic or inorganic acids or acidic salts. This leads to a pyrolysis of the carbohydrate material with expansion, resulting in a carbonized foam material which may be used as an additive to mineral fibre boards and the like. In pulverized form this carbonized foam material is also suitable for use as a lossening agent for cultivated grounds as disclosed by German patent 23 65 325. Redispersible hydrophobic starch products having a porous structure are disclosed in German Offenlegungsschrift 21 34 254, which products are produced by extruding a water-insoluble hydrophobic starch derivative having a low moisture content of 4-15% at temperatures of 100-200°C. The step of extruding dextrin in vacuo to form porous granules for the preparation of soups and broths is taught by German Auslegeschrift 25 49 391. These known processes, however, do not lead to proper, uniformly porous foam material being obtained from the starch or the starch derivative.

The object underlying the present invention is therefore to produce a foam material which can be prepared from readily available raw materials by using a simple method of preparation and which is suitable for many uses, like the well known synthetic foams, and which is moreover suitable for use in the foodstuff industry. Surprisingly, it has been found that such a foam material can be readily produced by the process steps as claimed herein, the relatively rigid foam obtained having numerous advantages as compared with the prior art products.

In the process according to the invention the starch material is already heated in the extruder owing to the pressure, and if desired additional heat is supplied from the outside to bring the reaction mixture — to the desired temperature, and the mass is expanded and foamed through the generation of has in the reaction of the expanding additives as the starch, gelling owing to the heat in the presence of the available water, is leaving the extruder nozzle, with simultaneous solidification of the pasty starch mass. Depending on the form of the nozzle the starch foam emerges in the form of a round or flat ribbon, which may be communicated and optionally pulverized after cooling.

The pores of the resulting starch foam are essentially open so that the foamed starch material is capable of adsorbing and taking up large amounts of liquids, oils, flavourings and the like. It is also suitable for use as a foodstuff, since the starch is not altered by this treatment to the extent that it cannot be colloidally dissolved by hot water and broken down by the digestive ferments. In finely pulverized form the foamed starch is a suitable means for retaining the fluidity of powders that tend to cake together, e.g., fatty milk products, in particular for calf-rearing. The comminuted foam material is also suitable for use as a disintegrating agent in tablets. In the form of lamps or granules the foamed starch products may also be fried in oil to produce crisp products.

For technical purposes, e.g., as foam sheets or as a filler for packing and gypsum sheets, the novel foam is to be considered as particularly friendly to the environment, because it is readily broken down and causes no burden from an ecological point of view. Depending on the use contemplated, colorants, cross-linking agents or also flame-inhibiting materials may be added to the starch mixture already in the extruder in order to further reduce the inflammability of the gelatinized starch products which, in themselves, are scarcely inflammable, or their solubility in water. In case calcium carbonate and phosphoric acid are used as expanding additives calcium carbonate is formed in situ, which is then contained in the foam product as a flame-inhibiting substance.

The acid required for liberating the gaseous carbon dioxide from the metal carbonate salts, or the carbonate salts may be added to the water component, which is added to the comminuted or pulverized starch, if their own moisture content does not correspond with the amount of water desired for the performance of the process. In general, commercially available starch already possesses a water content of 12-20%, so that in many cases it is not necessary to add water to the pulverized starch or starch composition, because this water content is sufficient to effect the desired gelatinization of the starch when it is heated in the extruder press. In that case the carbonate salt may be admixed, along with the solid pulverized acids such as citric acid etc., with the starch starting material, or a starch is used which already contains a slight amount of hydrochloric acid in the adsorbed state.

In particular when the combination of metal carbonates and acids is used, the blowing agents should be added to the starch starting material in a proportion of 0.01-10 wt.%, preferably 0.1-5 wt.%.

The process is preferably carried out in a continuous extruder comprising a cylinder with one or more rotating screws which produce a pressure build-up in the feed mixture, whereby the starch is gelled, by internal heat that is produced and/or by supplying external heat from the outside, and the mass is transferred to a pasty state. The expanding additives liberating or generating gas are thereby dissolved in the pasty mass, which is then pressed out of the pressure chamber of the extruder through one or more orifices into the atmosphere. Due to the pressure relief a spontaneous generation of gas and expansion of the simultaneously solidifying starch material occur, with a multiplicity of small and minute gas bubbles being produced. The addition of expanding agent is essential therefor, because otherwise, as in the prior art, the product is insufficiently porous owing to water vapours which are possibly set free. The addition of materials splitting off gas is therefore a crucial element in the manufacture of the products according to the invention.

If these are not present, the extruded starch product does not adopt the desired foamy texture, but is a more or less granular product.

The product obtained according to the invention is surprisingly similar to conventional synthetic foams, e.g. polystyrene foam. The bulk density of the foamed starch can be affected by the choice of the quantity of the gas-forming expanding agent. For instance, the litre weight may be within the range of from 10 to 500 g/l.

As a gas-providing expanding agent in the sense of the invention, all the substances known in the production of synthetic foams may be used in principle. Preferably, carbonate salts are used as non-toxic gas donors, even though the use of low-boiling and water-immiscible liquids is possible.

As stated before, the products obtained according to the invention are useful in many branches of industry. In view of the relatively low cost of the starch, which is available in practically unlimited quantities, the foamed starch is suitable for use as an economic packing material for the protection of vulnerable commodities. In construction engineering,too, it has utility for many purposes such as sound absorption and thermal insulation, because a sufficient resistance to water may also be obtained at high porosity, e.g. by the simultaneous use of an aldehyde (e.g. glyoxal) to insolubile the starch or by the addition of insolubilizing resins (e.g. urea or melamine resin). Unlike polystyrene foam, the starch foam, while being practially identical in appearance, is insoluble in organic solvents and will not melt under the influence of heat. Its combustibility is negligible in comparison with polystyrene or polyethylene, but it can be further affected by adding known flame-inhibiting agents.

Starch products prepared by the process of the invention and having a bulk density within the range of from 10 to 500 g/l, preferably within the range of from 200 to 450 g/l, possess advantages when they are ground for the purpose of preparing cold-soluble starch powder. Unlike normally extruded cold-soluble starches they do not contain horn-like, hardly grindable particles which, in addition, are only slowly or poorly soluble in water.

Furthermore, such ground starch foam powders possess a substantially reduced apparent density, which, though urgently needed for many uses, has not so far been possible to obtain.

A further advantage finally consists in that the bulky ground starch foam powders show a substantially improved mixing behaviour in water, because they do not tend to form undesirable lumps. All of these novel properties therefore render the starch foam products obtained according to the invention excellently suitable for use in many technical fields.

Another advantage of the process described is that the products may be prepared having a viscosity which is either lower or higher than is obtainable by the extrusion methods used so far.

Very interesting uses are in the field of foodstuffs. In particular, these starch-containing products are used as conditioners, as viscosity increasing additives or as stabilizers or binders in ground form or in the form of expanded granular material.

In the preparation of the foamed starch the mass contained in the extruder may also comprise other components, e.g., condiments, flavourings, colorants, fats, sugars and other carbohydrate-containing additives, proteins, salts etc., so that after expanding there is obtained a ready dry foodstuff. The additives, however, may also be applied afterwards to the ready expanded foam or to the ground starch foam powder, because the foam is capable of absorbing, e.g., large quantities of liquid owing to its low bulk density and its large surface area. Fats and oils are preferably absorbed in hot condition.

Odours and flavours are adsorbed or taken up to remarkable extent and also protected from changes. The starch foam powders produced according to the invention remain in the dry form even when containing additives in amounts of up to three times their own weight owing to the high porosity of the particles. This makes the present material different from conventional substances such as pre-gelatinized starches, maltodextrin, spray-dried glucose syrup and like products. It is clear that valuable dry products intended for instant preparations or as flavouring carriers may be prepared with the novel starch foam material, which products are distinguished by being immediately dissolved in cold or hot water.

The foam starch granulates resemble popped rice or popcorn by their "fluffy bite". They may be used as snacks with sugar or honey mixtures, optionally mixed with flavouring constituents such as dried onion powder or garlic, barbecue condiment, etc. Furthermore, it is possible to add to the starch mixture, in the extruder, indecomposable shells or pericarps of fruit or seed grains which become attached to the surface of the irregularly formed, "popped" foam bodies and thus produce the external features which are characteristic of, e.g. popcorn. By frying the ready starch foam in lumps in a frying device in oil by uniformly heating, novel crisp, crunchy food products are produced.

Example.

50 Kg of commercially available potato starch powder having a moisture content of 20% is mixed with 375 kg of pulverized adipic acid and 350 g of pulverized sodium bicarbonate, after which there is added 500 cc of water. The powder mixture is fed to a heated extruder. The temperature in the interior of the press is to be maintained at approximately 140°C.

0087847

The ribbon leaving the nozzle at the head of the extruder while being expanded is divided, after cooling, by rotating knives to obtain a grain size of the foam of approximately 3-5 cm.

The starch foam obtained may be directly used as a packing material for the protection of fragile articles.

C L A I M S.
=============

1.      A process for preparing foamed gelatizined starch products, characterized in that granular or pulverized starch or starch-containing materials are heated in an extruder press at temperatures of 60-220°C in the presence of 10-30 wt.% of water and a gas-forming or gas-generating expanding agent and then extruded.

2.      A process according to claim 1, characterized in that a starch material is used which is modified, optionally during the extrusion process, by esterification, etherification, oxidation or by partial hydrolytic decomposition or by means of a cross-linking agent.

3.      A process according to claim 1, characterized in that the expanding agent employed is a carbonate salt, an organic or inorganic acid or substances of acid reaction or acid-supplying substances.

4.      A process according to claim 3, characterized in that the metal carbonate employed is sodium or calcium carbonate and the acid employed is hydrochloric acid, adipic acid or citric acid.

5.      A process according to cliams 1-4, characterized in that the expanding agent is used in a proportion of 0.01-10%, preferably 0.1-5%, based on the weight of the starch.

6.      A process according to claims 1-5, characterized in that in order to modify the starch by cross-linking agents these are added to the starch or the starch-containing material in the extruding process.

7.      A process according to claim 6, characterized in that the cross-linking agent employed is glyoxal, formaldehyde, urea, melamine resin, urotropin or other wet strengtheners.

European Patent Office

**EUROPEAN SEARCH REPORT**

**0087847**
Application number

EP 83 20 0289

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | GB-A-1 008 042 (CORN PRODUCTS CO.) <br> * Claims 1,2; page 1, lines 65-75 * <br><br> --- | 1-3,6, 7 | C 13 L 1/08 <br> C 08 J 9/08 <br> C 08 L 3/00 |
| A | FR-A-2 439 802 (I. MEISELS et al.) <br> * Claim 1; page 2, lines 24-29 * <br><br> --- | 3-5 | |
| A | CHEMICAL ABSTRACTS, vol. 95, no. 23, 7th December 1981, page 540, no. 202312a, Columbus, Ohio, USA <br> & JP - A - 81 106 570 (NISSHIN FLOUR MILLING CO., LTD.) 24-08-1981 <br><br> --- | 1,3 | |
| A | CHEMICAL ABSTRACTS, vol. 84, no. 18, 3rd May 1976, page 111, no. 123767x, Columbus, Ohio, USA <br> & JP - A - 75 156 563 (SEKISUI KASEIHIN KOGYO K.K.) 17-12-1975 <br><br> ----- | 1 | TECHNICAL FIELDS SEARCHED (Int. Cl. ³) <br><br> C 08 J <br> C 13 L <br> A 23 L |

The present search report has been drawn up for all claims

| Place of search | Date of completion of the search | Examiner |
|---|---|---|
| THE HAGUE | 24-05-1983 | HALLEMEESCH A.D. |